Europäisches Patentamt

European Patent Office

Office européen des brevets

(19)

(11) Publication number: **0 420 250 A2**

(12) **EUROPEAN PATENT APPLICATION**

(21) Application number: 90118586.8

(22) Date of filing: 27.09.90

(51) Int. Cl.⁵: **G11B 7/00, G11B 7/125**

(30) Priority: 29.09.89 JP 253972/89

(43) Date of publication of application:
03.04.91 Bulletin 91/14

(84) Designated Contracting States:
DE FR GB NL

(71) Applicant: **KABUSHIKI KAISHA TOSHIBA**
**72, Horikawa-cho Saiwai-ku**
**Kawasaki-shi Kanagawa-ken 210(JP)**

Applicant: **TOSHIBA INTELLIGENT**
**TECHNOLOGY LTD.**
**70, Yanagi-cho Saiwai-ku**
**Kawasaki-shi Kanagawa-ken(JP)**

(72) Inventor: **Doi, Akihiko, c/o Intellectual**
**Property Div.**
**Kabushiki Kaisha Toshiba, 1-1 Shibaura**
**1-chome**
**Minato-ku, Tokyo 105(JP)**

(74) Representative: **Henkel, Feiler, Hänzel &**
**Partner**
**Möhlstrasse 37**
**W-8000 München 80(DE)**

(54) Optical disc apparatus.

(57) In an optical disk apparatus, a selection signal
(S11) for designating a time period for radiating a
laser beam is generated in accordance with a type
of an optical disk and one of pulse width setting
circuit (61a, 61b) is selected and activated in accor-
dance with the selection signal. The activated pulse
width setting circuit (61a, 61b) generates a recording
pulse signal (S7) depending on a recording signal
(S10). A semiconductor laser (5) is energized by the
recording pulse signal (S7). Thus, the laser beam is
emitted from the semiconductor laser (5) in accor-
dance with the type of the optical disk.

F I G. 2

## OPTICAL DISC APPARATUS

The present invention relates to an optical disc apparatus for recording information in an optical recording medium, such as an optical disc, and retrieving the information from the recording medium.

In a conventional optical disc apparatus for optically recording or retrieving information in or from an optical recording medium such as a non-erasable or erasable optical disc, information is retrieved from the optical disc by a laser beam emitted from a light source or a semiconductor laser which has a relatively low continuous optical output level. On the other hand, information is recorded in the optical disc by a laser beam having a relatively high optical output level which is varying intermittently.

In this type of optical disc apparatus, it is necessary that the time period during which a laser beam is radiated in the recording mode be varied in accordance with the type of optical disc. Even if optical discs of the same type are employed, the time period for radiation is varied in accordance with radial locations on the discs. Thus, exact recording is ensured, and reliability of recorded information is enhanced.

In the optical disc apparatus, however, the recording pulse signal S7 is generated by use of a single recording pulse width setting circuit 61. Thus, different types of optical discs cannot be employed, and the time period for radiating the laser beam cannot be varied in accordance with radial locations on the optical discs.

The object of the present invention is to provide an optical disc apparatus wherein various types of optical discs can be used, and the time period for radiation of a laser beam can be varied in accordance with the radial location on the optical disc, whereby reliability of information recording is enhanced.

According to the present invention, there is provided an apparatus for recording information on an optical recording medium with a light beam, comprising means for generating a selection signal for designating a time period for radiating the light beam, means for generating a recording signal having a pulse width corresponding to the selection signal, the recording signal corresponding to recording information, means, energized by the recording signal, for outputting a pulsative recording light beam corresponding to the recording signal onto the optical recording medium, and means for radiating the pulsative recording light beam on the optical recording medium to record thereon.

According to the present invention, there is provided an apparatus for recording information on an optical recording medium with a light beam, comprising means for generating a selection signal for designating a time period for radiating the light beam, means for generating a recording signal having a pulse width corresponding to the selection signal in a recording mode, the recording signal corresponding to recording information, means for generating a retrieval drive signal in a retrieval mode, means energized by the recording signal in the recording mode, for outputting a pulsative recording light beam corresponding to the recording signal onto the optical recording medium, and energized by the retrieval drive signal in the retrieval mode, for outputting a retrieval light beam having a constant intensity, means for converging the recording light beam towards the optical recording medium to record information on the optical recording medium with the recording light beam, and means for detecting the retrieval light beam from the optical recording medium and converting the detected retrieval light beam to a retrieval signal.

This invention can be more fully understood from the following detailed description when taken in conjunction with the accompanying drawings, in which:

Fig. 1 is a block diagram showing the structure of an optical disc apparatus according to the present invention;

Fig. 2 is a circuit diagram showing the structure of a driving unit for a semiconductor laser in the optical disc apparatus shown in Fig. 2;

Fig. 3 is a circuit diagram showing the structure of a circuit for setting a recording pulse width, which is shown in Fig. 2; and

Figs. 4A to 4E form a timing chart for illustrating the operation of the recording pulse width setting circuit shown in Fig. 3.

An optical disc apparatus according to an embodiment of the present invention will now be described with reference to the accompanying drawings.

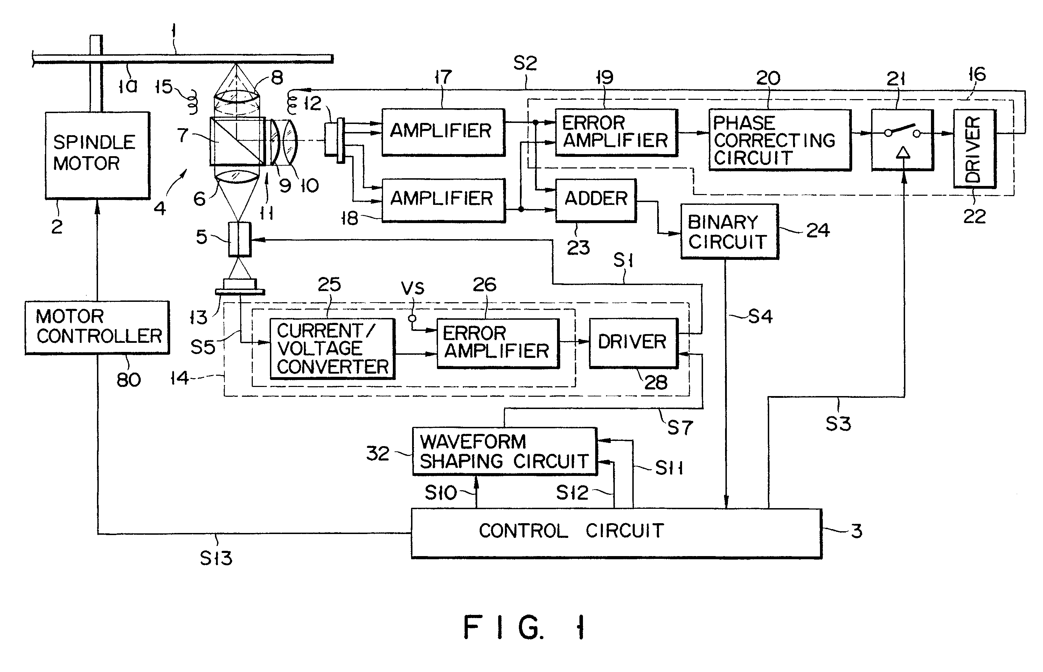

Fig. 1 shows a schematic structure of an optical disc apparatus serving as an information recording apparatus according to the present invention. Referring to Fig. 1, an optical disc 1 is formed by coating the surface of a circular substrate made of, e.g. glass or plastics, with a metal layer of tellurium, bismuth, etc. in an annular shape. There are known various types of optical discs 1, for example, having high-sensitivity or low-sensitivity to optical beams. The data representative of the type of the optical disc 1 is input through a keyboard (not shown). Alternatively, the type of the disc 1 is discriminated by detecting an identification hole formed in the disc 1 which indicates the type of disc, or by reading pit information recorded on the disc which indicates the type of disc. The optical disc 1 is rotated by a spindle motor 2. The start, stop, and rotation speed of the spindle motor 2 are controlled by a motor controller 80 which is operated in accordance with a control signal from a control circuit 3.

The control circuit 3 comprises a microcomputer. The control circuit 3 generates various control signals, for example, a selection signal S11 for determining the recording pulse width in accordance the type of optical disc 1, a selection signal S12 for determining the recording pulse intensity in accordance with the type of optical disc 1, and a selection signal S13 for controlling the rotation of the spindle motor 2.

An optical head 4 is situated below the optical disc 1. The optical head 4 functions to focus a light beam onto the optical disc 1 in order to record/retrieve information in/from the disc 1. The optical head 4 comprises a conventional astigmatic optical system 11 (including a semiconductor laser 5, a collimator lens 6, a polarizing beam splitter 7, an objective lens 8, a cylindrical lens 9 and a convex lens 10), a four-division optical detector 12 having four optical detection regions or cells, and an optical detector 13. The optical head 4 is moved in the radial direction of the optical disc 1 by means of a moving mechanism (not shown) comprising a linear motor, etc. The head 4 is caused to seek a target track for data recording or retrieval, in accordance with a control signal from the control circuit 3.

The semiconductor laser 5 generates a divergent laser beam in accordance with a drive signal S1 from an output power control circuit 14. In the recording mode in which information is recorded in a recording film 1a of optical disc 1, the intensity of a laser beam is modulated on the basis of information to be recorded, so that a high-level laser beam is generated. In the retrieval mode in which information is retrieved from the recording film 1a of optical disc 1, a laser beam having a relatively low constant level is generated.

The divergent laser beam generated from the semiconductor laser 5 is converted to a parallel beam through the collimator lens 6, and the parallel beam is led to the polarizing beam splitter 7. The laser beam passes through the beam splitter 7 and enters the objective lens 8. The beam is then focused onto the recording film 1a of the optical disc 1 by means of the objective lens 8.

The objective lens 8 is supported by a lens actuator 15 serving as a lens driving mechanism so as to be movable along the optical axis. The objective lens 8 is moved along the optical axis in response to a focus servo signal S2 from a focus servo circuit 16. By virtue of this movement, the objective lens 8 is kept in a focused position. The beam is focused onto the surface of the recording film 1a of the optical disc 1 through the objective lens 8. A minimum beam spot is formed on the surface of the recording film 1a of the optical disc 1.

The objective lens 8 is also supported so as to be movable along an axis perpendicular to the optical axis. The lens 8 is moved along an axis perpendicular to the optical axis in response to a servo signal from a tracking servo circuit (not shown). By virtue of this movement, the objective lens 8 is kept in a focused position. The objective lens 8 is directed to a recording track formed on the surface of the recording film 1a of the optical disc 1, and the recording track is traced by the converged laser beam. The objective lens 8 is kept in the focused position and is directed exactly to the track, so that information is retrieved/recorded from/in the optical disc.

On the other hand, in the focused state, the divergent laser beam reflected from the recording film 1a of the optical disc 1 is converted to a parallel beam through the objective lens 8, and the beam is returned to the polarizing beam splitter 7. The beam reflected by the polarizing beam splitter 7 is led to the four-division optical detector 12 through the astigmatic optical system 11 comprising the cylindrical lens 9 and the convex lens 10. Thus, the beam is focused on the optical detector 12 in the state wherein a focus error is represented by the variation in the shape of the beam. The four-division optical detector 12 comprises four optical detection cells for converting the light beam focused by the astigmatic optical system 11 into electric signals. Two pairs of signals output from the diagonally arranged detection cells of the four-division optical detector 12 are supplied to amplifiers 17 and 18.

The focus servo circuit 16 comprises an error amplifier for amplifying an error between two signals amplified by the amplifiers 17 and 18; a phase correcting circuit 20 for correcting the phase of an output signal from the error amplifier 19; an analog switch 21 for determining whether an output signal from the phase correcting circuit 20 is to be supplied to a driver 22; and the driver 22 for amplifying a signal from the analog switch 21 and driving the actuator 21. When the analog switch 21 is turned on by a focus on/off signal S3 from the control circuit 3, a focus servo loop is formed. Specifically, when the analog switch 21 is turned on, the signal from the phase correcting circuit 20 is supplied to the actuator 15 through the driver 22, thereby moving the objective lens 8 along the optical axis.

Output signals from the amplifiers 17 and 18 are supplied to an adder 23. The added resultant signal from the adder 23 is representative of the information recorded in the optical disc 1, and is sent to a binary circuit 24. The binary circuit 24 comprises a comparator and compares the analog signal from the adder 23 with a predetermined threshold level Th, thus converting the analog signal to a binary signal. The binary reflection signal S4 from the binary circuit 24 is supplied to the control circuit 3.

A waveform shaping circuit 32 shapes the waveform of the recording data S10 and supplies the resultant signal to a driver 28 (described later) as a recording pulse signal S7. The waveform shaping circuit 32 will be describe later in greater detail.

The semiconductor laser 5 has a front port and a rear port. A recording/retrieval laser beam is emitted from the front port, and a monitor laser beam is emitted from the rear port. The rear port faces the optical detector 13 comprising a photoelectrical converter element such as a photodiode. The optical detector 13 converts the monitor beam from the semiconductor laser 5 to an electric signal. The electric signal is supplied to the output power control circuit 14 as an optical output monitor signal S5 from the semiconductor laser 5.

The output power control circuit 14 receives the optical output monitor signal S5 from the semiconductor laser 5 and carries out feedback control. Thus, the the optical output from the semiconductor laser 5 is kept constant. The output power control circuit 14 comprises the retrieval laser beam controller 51 and driver 28. A current/voltage converter 25 included in the retrieval laser beam controller 51 converts the optical output monitor signal S5 (or the photoelectrically converted current signal from the optical detector 13) to a voltage signal S6 corresponding to the intensity of the beam received by the optical detector 13 or the optical output from the semiconductor laser 5. The voltage signal S6 is supplied to an error amplifier 26.

The error amplifier 26 receives at one input terminal the voltage signal S6 and at the other input terminal a reference voltage Vs generated from a constant voltage generator (not shown). The error amplifier 26 compares the voltage signal S6 with the reference voltage Vs, to generate a difference signal as signal. The error signal is amplified and is output. The reference voltage Vs is a constant voltage for obtaining an optical output necessary for information retrieval. Feedback control is carried out to make the voltage signal S6 to the reference voltage Vs, so that the semiconductor laser 5 may generate a constant output. The error signal from the error amplifier 26 is supplied to the driver 28.

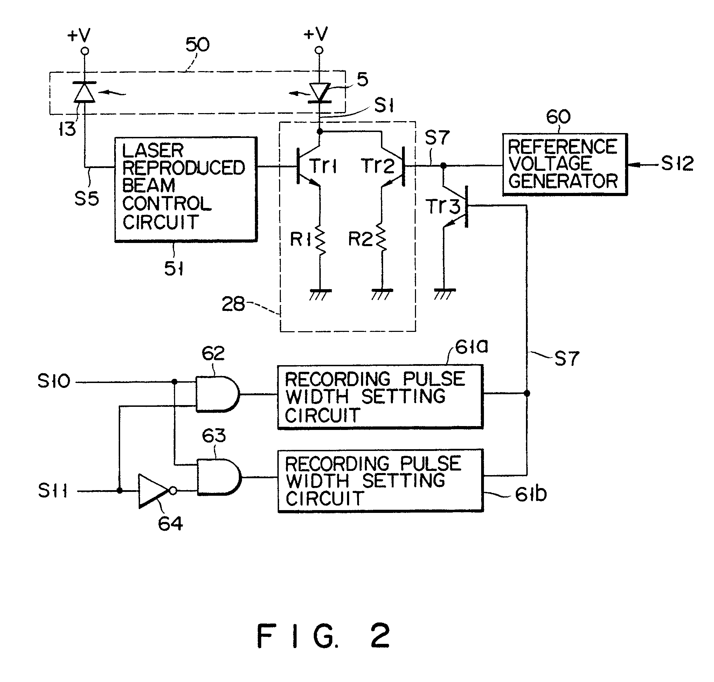

The driver 28 receives from the waveform shaping circuit 32 the recording pulse signal S7 corresponding to information to be recorded, and causes the semiconductor laser 5 to generate an optical output for information recording. The driver 28 has a circuit structure as shown in Fig. 2. The collector of a transistor Tr1 for generating a retrieval beam and the collector of a transistor Tr2 for generating a recording beam are connected to one terminal of the semiconductor laser 5. The other terminal of the semiconductor laser 5 is connected to a reference voltage AV. The emitter of the transistor Tr1 is connected to a ground through a resistor R1, and the emitter of the transistor Tr2 is connected to a ground through a resistor R2. In the retrieval mode, the base of the transistor Tr1 receives a feedback voltage signal from the retrieval laser beam controller 51. In the recording mode, the base of the transistor Tr1 receives a sample-hold voltage signal from a sample-hold circuit (not shown). The sample-hold circuit holds the voltage value in the retrieval mode just prior to the recording mode. The two input signals are switched in accordance with the recording mode or retrieval mode. In both the recording mode and retrieval mode, feedback control is carried out at the optical output level of the retrieval mode.

The transistor Tr2 is provided to generate a high-level laser beam in the recording mode. The base of the transistor Tr2 is supplied with a predetermined voltage for information recording, from the reference voltage generator 60 for generating a reference voltage for the waveform shaping circuit 32. The reference voltage is determined so as to correspond to the selection signal S12 applied to the waveform shaping circuit 32. The base of the transistor Tr2 is connected to the collector of a transistor Tr3. The emitter of the transistor Tr3 is connected to a ground. The base of the transistor Tr3 is supplied with a recording pulse signal S7 having a pulse width corresponding to the recording data signal S10 output from one of a recording pulse width setting circuit 61a and a recording pulse width setting circuit 61b.

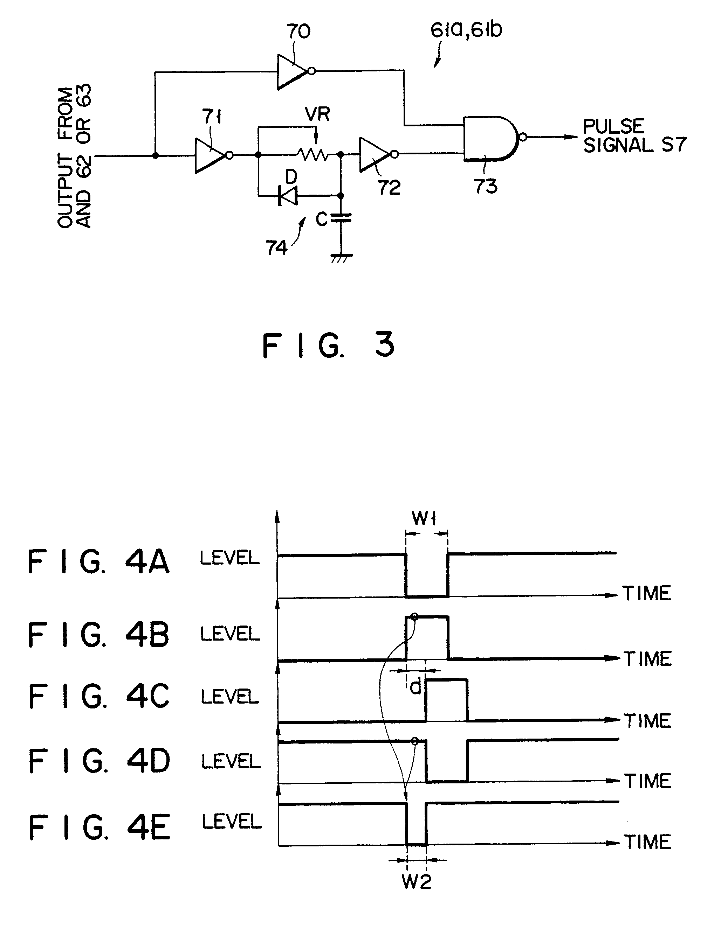

The recording pulse width setting circuit 61a (61b) receives the recording data signal S10 corresponding to the recording data, and adjusts the pulse width of the recording data signal S10 in accordance with the selection signal S11, thereby outputting the recording pulse signal S7. The recording pulse width setting circuits 61a and 61b have substantially the same structure, and each comprises inverters 70, 71 and 72, a NAND gate 73, a variable resistor VR, a capacitor C and a diode D, as is shown in Fig. 3.

In the recording pulse width setting circuit 61a (61b) shown in Fig. 3, when a recording signal having a pulse width W1 (shown in Fig. 4A) is applied to the inverters 70 and 71, the recording signal is inverted by the inverters 70 and 71, as shown in Fig. 4B. The inverted signal from the inverter 70 is supplied to one input terminal of the NAND gate 73. On the other hand, the inverted signal from the inverter 71 is delayed by a CR time constant circuit 74 by period d1, as shown in Fig. 4C, and is supplied to the inverter 72. Then, as shown in Fig. 4D, the inverted signal from the inverter 72 is applied to the other input terminal of the NAND gate 73. As is shown in Fig. 4E, a logical product is obtained in the NAND gate 73, and the value of the logical product is inverted. Thus, a signal having an adjusted pulse width W2 is output as the pulse signal S7.

The transistor Tr3 is turned on/off in accordance with the recording pulse signal S7 from the pulse width setting circuit 61 and, in turn, the transistor Tr2 is turned on/off. More specifically, when the pulse signal S7 shown in Fig. 5E is input to the gate of the transistor Tr3, the transistor Tr3 is turned on while the pulse signal S7 is at a high level. Since the gate of the transistor Tr3 is connected to a ground, the transistor Tr2 is turned off. While the pulse signal is at a low level, i.e. during the time period corresponding to the pulse width W2, the transistor Tr3 is turned off and the base of the transistor Tr2 is supplied with a reference voltage associated with the optical disc 1 in which information is to be recorded. Thus, the transistor Tr2 is turned on. Consequently, the semiconductor laser 5 is driven in the recording mode during the time corresponding to the pulse width W2. In other words, the semiconductor laser 5 is driven by the signal applied to the collectors of the transistors Tr1 and Tr2, in accordance with the type of the optical disc. The semiconductor laser 5 emits a high-level laser beam intermittently, whereby information is recorded in the optical disc in an optimal condition.

Either of the recording pulse width setting circuits 61a and 61b is selected by the selection signal S11 from the control circuit 3 in accordance with the recording operation to be carried out. As is shown in Fig. 2, when the selection signal S11 is applied to a selection circuit constituted by AND gates 62 and 63 and an inverter 64, either AND gate 62 or 63 is activated, and allow the recording data signal S10 to pass through. The recording pulse width setting circuit 61a (or 61b), to which the recording data signal S10 has been supplied, outputs the recording pulse signal S7 to the base of the transistor Tr3. Thus, the recording is performed. The pulse width setting circuit 61a or 61b is selected in accordance with the selection signal S11, and the pulse width of the recording pulse S7 is set in accordance with the type of the optical disc.

The operation of the optical disc apparatus having the above structure will now be described.

Prior to the start of the recording operation, the optical output of the semiconductor laser 5 is checked in an initial operation. Specifically, a linear motor (not shown) is driven by a control signal from the control circuit 3, and the objective lens 8 is directed to a non-recording region on the optical disc 1. The non-recording region is located on the innermost area and/or outermost area on the optical disc 1. No information is recorded in the non-recording region. Since the optical head 4 is initially moved to the non-recording region, destruction of recorded data due to an abnormal laser beam can be prevented. Subsequently, the focus on/off signal S3 is generated from the control circuit 3 to turn off the analog switch 21 and to break the focus servo loop. As a result, the objective lens 8 is released from the focus control. Then, a signal (not shown) is supplied from the control circuit 3 to the lens actuator 15 through the driver 22, thereby forcibly moving the lens actuator 15. The objective lens 8 is forcibly moved to the location indicated by a dotted line (in Fig. 1) and is brought to a defocused state. In the de-focused state, electric power is supplied to the output power control circuit 14, and thereby the semiconductor laser 5 is turned on. A laser beam is generated from the semiconductor laser 5. The monitor beam generated from the laser 5 is converted to a corresponding current and is output as optical output monitor signal S5. The current/voltage converter 25 converts the optical output monitor signal S5 to a voltage signal S6, and supplies the voltage signal S6 to the error amplifier 26. The error amplifier 26 compares the voltage signal S6 with a predetermined reference voltage Vs, and outputs a difference therebetween as an error signal. When the voltage signal S6 is greater than the reference signal Vs, the optical output of the semiconductor laser 5 is decreased on the basis of the error signal. When the voltage signal S6 is lower than the reference signal V, the optical output of the semiconductor laser 5 is increased on the basis of the error signal. The error signal is supplied to the driver 28 to form the feedback loop, whereby the difference between the reference voltage Vs and the voltage signal S6 is decreased. Thus, the optical output of the semiconductor laser 5 is kept constant.

Subsequently, the control circuit 3 drives the actuator 15 through the driver 22, and the objective lens 8 is moved to the focused position. When it is detected that the objective lens 8 has reached the focused position, the analog switch 21 is turned on to constitute the focus servo loop. Thus, the initial operation is completed. Thereafter, the automatic focus control using the focus servo loop is carried out, and operations for information retrieval/recording from/in the optical disc 1 are performed.

The recording operation is performed in the following manner. The data relating to the type of optical disc 1 is input through a keyboard (not shown). Alternatively, the type of the disc 1 is discriminated by detecting an identification hole formed in the disc 1 which indicates the type of disc, or by reading pit information recorded on the disc which indicates the type of disc. The optical disc 1 is rotated by a spindle motor 2. In accordance with the type of optical disc 1, the control circuit 3 outputs the selection signal S11 for determining the recording pulse width, and the selection signal S12 for determining the recording pulse intensity. The recording pulse width setting circuit 61a or 61b for the recording operation, which corresponds to the type of optical disc 1, is selected, and the width of the recording pulse is determined. Thus, the reference voltage generated from the reference voltage setting circuit 60 is determined. In addition, the control circuit 3 supplies to the motor controller 80 a speed signal S13 for determining the speed of rotation corresponding to the optical disc 1. In response to the speed signal S13, the motor controller 80 energizes the motor 2 and causes the optical disc 1 to rotate in accordance with the type of the optical disc 1. Subsequently, recording data is supplied from a host computer (not shown) to the control circuit 3. Based on the recording data, the control circuit 3 outputs pulsative recording data S10. The recording data S10 is supplied to a selected one of the recording pulse width setting circuits 61a and 61b of the waveform shaping circuit 32, and then to the transistor Tr3 in the driver 28. The semiconductor laser 5 is caused to emit an intermittent high-level laser beam in accordance with the recording data S10. The beam generated by the laser 5 has an optimal light intensity and an optimal pulse width in accordance with the type of the optical disc. In other words, in accordance with the type of optical disc 1, a laser beam having an intensity enough to record information is radiated onto the optical disc, thus ensuring exact recording of information in the disc.

The laser beam is converted to a parallel beam through the collimator lens 6. The parallel beam is led to the polarizing beam splitter 7 and then to the objective lens 8. The beam is focused through the objective lens 8 onto the recording film 1a of the optical disc 1. Thus, ideal information recording corresponding to the type of optical disc 1 can be effected on the recording film 1a of the optical disc 1.

The retrieval operation is performed in the following manner. A voltage held by a sample-hold circuit (not shown) is supplied to the driver 28 to allow the semiconductor laser 5 to emit a constant low-level laser beam. The laser beam is converted to a parallel beam through the collimator lens 6. The parallel beam is led to the polarizing beam splitter 7 and then to the objective lens 8. The beam is focused through the objective lens 8 onto the recording film 1a of the optical disc 1. A divergent laser beam reflected from the recording film 1a of disc 1 is converted to a parallel beam through the objective lens 8 and is returned to the polarizing beam splitter 7. The beam is reflected by the polarizing beam splitter 7 and is focused on the four-division optical detector 12 through the astigmatic optical system 11 comprising the cylindrical lens 9 and convex lens 10. The four-division optical detector 12 photoelectrically converts the input beam to signals. These signals are input to the amplifiers 17 and 18. The amplified signals from the amplifiers 17 and 18 are fed to the focus servo circuit 16 (including the error amplifier 19) and are used for focus control. Simultaneously, the amplified signals are supplied to the adder 23 and are added. The output from the adder 23 is supplied to the binary circuit 24.

The binary circuit 24 compares the signal from the adder 23 with a predetermined threshold level Th, thereby outputting a binary reflection optical signal S4. The reflection optical signal S4 is supplied to the control circuit 3. The control circuit 3 supplies the signal S4 to a host apparatus (not shown) to carry out display or printing.

The recording operation may be modified in accordance with the radial location of the recording region on the optical disc, or in consideration of the type of optical disc 1. Specifically, the optical disc 1 has a tracking guide in which information is to be recorded, and the radial location of the tracking guide is recorded in the optical disc 1 as a track address. The track address is read out by the retrieval laser beam, thereby determining the recording region. Once the recording region is determined, the control circuit 3 outputs the selection signal S11 for determining the recording pulse width and the selection signal S12 for determining the recording pulse intensity, in accordance with the recording region (or the track address). Subsequently, the recording pulse setting circuit 61a or 61b, which corresponds to the recording operation suitable for the recording region, is selected thereby determining the recording pulse width and the reference voltage generated from the reference voltage setting circuit 60. The control circuit 3 supplies to the motor controller 80 a speed signal S13 for determining the speed of rotation which corresponds to the recording region. Responding to the speed signal S13, the motor controller 80 energizes the motor 2. Thus, the optical disc 1 is rotated in accordance with the type of the disc 1. Then, recording data fed from the host computer (not shown) is supplied to the control circuit 3, and the control circuit 3 outputs pulsative recording data S10. The recording data S10 is supplied to the selected recording pulse width setting circuit 61a or 61b of the waveform shaping circuit 32, and subsequently to the transistor Tr3 in the driver 28. The driver 28 causes the semiconductor laser 5 to emit an intermittent high-level laser beam. The laser 5 outputs a laser beam having an optimal light intensity and an optimal pulse width in accordance with the type of optical disc 1. In other words, the laser beam suitable for recording information on the recording region of the optical disc 1 is radiated onto the disc, ensuring exact information recording on the optical disc.

As has been described above, there are provided a plurality of recording pulse width setting circuits for setting the pulse width or the time during which a pulsative recording beam is generated from the semiconductor laser 5. One of the recording pulse width setting circuits is selected, for example, in accordance with the type of optical disc. Using the selected recording pulse width setting circuit, a recording beam having a predetermined pulse width is generated. Thus, information can be recorded with a laser beam having an optimal pulse width in accordance with the type of optical disc 1. In addition, information can be recorded, while changing the pulse width in accordance with the radial location on the optical disc.

In the above-described embodiment, two recording pulse width setting circuits are employed; however, the number of these circuits may be three or more. When the number of recording pulse width setting circuits is increased, the number of types of optical discs, which can be used, is also increased. In addition, finer control is possible, when information is recorded while changing the pulse width in accordance with the radial location on the disc.

As has been described above in detail, the present invention can provide an optical disc apparatus wherein various types of optical discs can be used, and the time for radiation of a laser beam can be varied in accordance with the radial location on the optical disc. Therefore, reliability of information recording is enhanced.

**Claims**

1. An apparatus for recording information on an optical recording medium with a light beam, characterized by comprising:
means (3) for generating a selection signal for designating a time period for radiating the light beam;
means (32) for generating a recording signal having a pulse width corresponding to the selection signal, said recording signal corresponding to recording information;
means (5), energized by said recording signal, for outputting a pulsative recording light beam corresponding to the recording signal onto the optical recording medium (1); and
means (6, 7, 8) for radiating the pulsative recording light beam on the optical recording medium to record thereon.

2. The apparatus according to claim 1, characterized in that said selection signal generating means (3) generates the selection signal in accordance with the type of the recording medium (1).

3. The apparatus according to claim 1, characterized in that said selection signal generating means (3) generates the selection signal in accordance with a recording region on the optical recording medium (1).

4. The apparatus according to claim 1, characterized by further comprising energizing means (28) for energizing the light beam generating means (5), thus enabling the light beam generating means (5) to generate a retrieval light beam having a predetermined light intensity.

5. The apparatus according to claim 4, characterized by further comprising means (12) for detecting the retrieval light beam from the optical recording medium and converting the detected retrieval light beam to a retrieval signal.

6. The apparatus according to claim 1, characterized by further comprising rotating means (2) for rotating the optical recording medium (1) at a rotation speed corresponding to the type of the recording medium (1).

7. The apparatus according to claim 1, characterized by further comprising means (60) for setting the light intensity of the recording light beam in accordance with the type of the recording medium (1).

8. The apparatus according to claim 1, characterized in that said recording signal generating means (32) includes first and second pulse width setting circuits (61a, 61b) capable of generating recording signals having first and second pulse widths, one of which is selected by the selection signal.

9. An apparatus for recording information on an optical recording medium with a light beam, characterized by comprising:
means (3) for generating a selection signal for designating a time period for radiating the light beam;
means (32) for generating a recording signal having a pulse width corresponding to the selection signal in a recording mode, said recording signal corresponding to recording information;
means (51) for generating a retrieval drive signal in a retrieval mode;

means (5) energized by said recording signal in the recording mode, for outputting a pulsative recording light beam corresponding to the recording signal onto the optical recording medium, and energized by said retrieval drive signal in the retrieval mode, for outputting a retrieval light beam having a constant intensity;

means (8) for converging the recording light beam towards the optical recording medium (1) to record information on the optical recording medium (1) with the recording light beam; and

means (12) for detecting the retrieval light beam from the optical recording medium (1) and converting the detected retrieval light beam to a retrieval signal.

10. The apparatus according to claim 9, characterized in that said selection signal generating means (3) generates the selection signal in accordance with the type of the recording medium.

11. The apparatus according to claim 9, characterized in that said selection signal generating means (3) generates the selection signal in accordance with a recording region on the optical recording medium.

12. The apparatus according to claim 9, characterized by further comprising energizing means (28) for energizing the light beam generating means (5), thus enabling the light beam generating means (5) to generate a retrieval light beam having a predetermined light intensity.

13. The apparatus according to claim 9, characterized by further comprising rotating means (2) for rotating the optical recording medium (1) at a rotation speed corresponding to the type of the recording medium (1).

14. The apparatus according to claim 9, characterized by further comprising means (60) for setting the light intensity of the recording light beam in accordance with the type of the recording medium.

15. The apparatus according to claim 9, characterized in that said recording signal generating means (32) includes first and second pulse width setting circuits (61a, 61b) capable of generating recording signals having first and second pulse widths, one of which is selected by the selection signal.

F I G. 1

EP 0 420 250 A2

F I G. 2

F I G. 3

F I G. 4A   LEVEL

F I G. 4B   LEVEL

F I G. 4C   LEVEL

F I G. 4D   LEVEL

F I G. 4E   LEVEL